# EUROPÄISCHE PATENTSCHRIFT

(11) **EP 1 080 954 B1**
(45) Veröffentlichungstag und Bekanntmachung des Hinweises auf die Patenterteilung: **02.07.2008**
(21) Anmeldenummer: 00118723.6
(22) Anmeldetag: 30.08.2000
(51) Int. Cl.: B60G 21/05, B60G 7/00, B60B 35/00

(54) **Querträger als Bestandteil einer Verbundlenkerachse**
Cross beam as a component of a twist beam axle
Traverse faisant partie intégrante d'un essieu à traverse déformable en torsion

(30) Priorität: 02.09.1999 DE 29915351 U; 02.09.1999 DE 29915438 U; 18.08.2000 DE 20014433 U
(43) Veröffentlichungstag der Anmeldung: 07.03.2001
(73) Patentinhaber: BENTELER AG, D-33104 Paderborn (DE)
(72) Erfinder: Gläser, Klaus, 33154 Salzkotten (DE); Christophliemke, Wigbert, 33758 Schloss Holte-Stuckenbrock (DE)
(74) Vertreter: Griepenstroh, Jörg

(56) Entgegenhaltungen:
- EP-A- 0 681 932
- EP-A- 0 752 332
- DE-C- 19 653 959
- DE-U- 29 809 241

## Beschreibung

Es sind diverse Vorschläge bekannt geworden, wie der Querträger einer Verbundlenkerachse eines Personenkraftwagens ausgestaltet werden soll, um diesen auf der einen Seite biegesteif, auf der anderen Seite aber auch ausreichend torsionsweich zu gestalten. Dazu zählen beispielsweise die Vorschläge der EP 0 249 537 B1, der EP 0 681 932 A2, der gattungsgemäßen EP 0 752 332 B1, der DE-297 20 207 U und der US 2,069,911 A.

Allen diesen Querträgern ist jedoch die Eigenschaft zu eigen, dass ihre Fertigung insgesamt aufwendig ist und daher die Gestehungskosten im Rahmen einer kompletten Verbundlenkerachse hoch sind. Insbesondere ist es in den bekannten Fällen von Nachteil, dass aufgrund der für die Ausgangsrohre eingesetzten Stähle Warmbehandlungen in mehreren Schritten notwendig sind. So ist es erforderlich, die kaltumgeformten Rohrprofile zunächst zu glühen, dann zu härten und anschließend wieder anzulassen, um sie letztlich der Weiterkonfiguration zur Fertigstellung einer Verbundlenkerachse zuzuführen. Alle diese Verfahrensschritte erfordern besondere Vorrichtungen und die Bereitstellung diverser Energieträger, damit ein einsatzfähiges Rohrprofil zur Verfügung gestellt werden kann.

Ausgehend vom Stand der Technik liegt der Erfindung die Aufgabe zugrunde, einen Querträger als Bestandteil einer Verbundlenkerachse eines Personenkraftwagens zu schaffen, der im Vergleich zum Stand der Technik mit einem deutlich einfacheren Verfahren hergestellt werden kann.

Die Lösung dieser Aufgabe besteht nach einer ersten Variante der Erfindung in den Merkmalen des Patentanspruchs 1.

Wesentlicher Bestandteil der Erfindung bildet der Sachverhalt, dass ein zur Kaltumformung bereitgestelltes Ausgangsrohr gleich welchen Querschnitts jetzt aus einem mikrolegierten höherfesten Stahl gebildet ist. Ein derartiger Stahl erfüllt die Voraussetzungen, die an einen Querträger als Bestandteil einer Verbundlenkerachse eines Personenkraftwagens gestellt werden. Durch den Fortfall von Warmbehandlungen mit den damit verbundenen Energieträgern und Vorrichtungen einschließlich des Zeitaufwands ist im Rahmen der Erfindung ein hohes wirtschaftliches Ausbringen, insbesondere aufgrund der wesentlich kürzeren Fertigungszeit, gewährleistet. Ein wirtschaftlicheres Ausbringen führt zwangsläufig zu einer kostengünstigeren Fertigung mit dem Ergebnis, dass auch eine Verbundlenkerachse kostengünstiger hergestellt werden kann, was sich letztlich in den Kosten eines Personenkraftwagens auswirkt.

Nach den Merkmalen des Patentanspruchs 2 kann das Ausgangsrohr für den Querträger aus einem kalt- oder warmgewalzten mikrolegierten höherfesten Stahl bestehen.

Insbesondere wird in diesem Zusammenhang nach Patentanspruch 3 das Rohr aus einem Stahl der Werkstoffqualität S420NC gebildet.

Eine weitere Variante zur Lösung der der Erfindung zugrundeliegenden Aufgabe besteht in den Merkmalen des Patentanspruchs 4.

Hiernach ist ein zur Kaltumformung bereitgestelltes Ausgangsrohr gleich welchen Querschnitts jetzt aus einem mehrphasigen höherfesten Stahl gebildet. Ein derartiger Stahl erfüllt ebenfalls die Voraussetzungen, die an einen Querträger als Bestandteil einer Verbundlenkerachse eines Personenkraftwagens gestellt werden. Ansonsten gelten dieselben Vorteile, wie sie zu den Merkmalen des Patentanspruchs 1 angegeben sind.

Nach den Merkmalen des Patentanspruchs 5 kann das Ausgangsrohr für den Querträger aus einem kalt- oder warmgewalzten mehrphasigen höherfesten Stahl bestehen.

Bevorzugt wird gemäß Patentanspruch 6 ein Dual-Phasen-Stahl zum Einsatz gelangen.

Insbesondere wird in diesem Zusammenhang nach Patentanspruch 7 das Rohr aus einem Stahl der Werkstoffqualität DP 600 gebildet.

Eine weitere Ausführungsform besteht in den Merkmalen des Patentanspruchs 8. Danach besteht das Rohr aus einem ferritisch-bainitischen Stahl.

Eine dritte Lösung der der Erfindung zugrundeliegenden Aufgabe besteht in den Merkmalen des Patentanspruchs 9.

Durch den Einsatz von Edelstahl kann eine weitere Kosten- und Gewichtsreduktion eines Querträgers erzielt werden. Der zum Einsatz gelangende Edelstahl besitzt eine hohe Dehnung und ist daher gut verformbar. Durch Kaltverfestigung wird eine hohe mechanische Festigkeit erreicht. Insgesamt ergeben sich aus den Vorteilen eine sehr hohe Lebensdauer der Verbundlenkerachse im allgemeinen und des Querträgers im besonderen.

Vorteilhaft ist ferner, dass auf eine Lackierung oder sonstige Beschichtung des Querträgers verzichtet werden kann.

Die Konfiguration des Querträgers kann in Abhängigkeit von den jeweiligen Anforderungen unterschiedlich sein. So ist es beispielsweise entsprechend den Merkmalen des Patentanspruchs 10 möglich, dass die Endabschnitte einen kreisrunden Querschnitt besitzen.

Nach Patentanspruch 11 können die Endabschnitte aber auch einen von der Kreisform abweichenden Querschnitt aufweisen. Ein solcher Querschnitt kann oval oder auch schuhförmig sein. Das heißt, auch bei einem schuhförmigen Endabschnitt ist der Querschnitt U-förmig und doppelwandig. Er ist zu Anbindung an einen Längslenker lediglich größer gestaltet.

Des Weiteren ist es möglich, dass unabhängig von der Gestaltung der Endabschnitte das Rohrprofil, insbesondere am Übergang von dem U-förmigen mittleren Längenabschnitt auf die torsionssteifen Endabschnitte, mit Versteifungssicken versehen ist, die nach innen oder außen ausgeformt sein können.

Darüberhinaus ist es nach den Merkmalen des Patentanspruchs 12 möglich, dass wenigstens die äußere Oberfläche des Rohrprofils einer insbesondere mechanischen Oberflächenverfestigung unterzogen sein kann. Gegebenenfalls kann auch die innere Oberfläche verfestigt sein.

Eine derartige Oberflächengestaltung erfolgt gemäß Patentanspruch 13 bevorzugt dadurch, dass mindestens die äußere Oberfläche des Rohrprofils mit Kugeln, insbesondere Stahlkugeln, bestrahlt wird.

Die Erfindung ist nachfolgend anhand eines in den Zeichnungen dargestellten Ausführungsbeispiels näher erläutert. Es zeigen:
- Figur 1: in der Perspektive eine Verbundlenkerachse eines Personenkraftwagens;
- Figur 2: in der Draufsicht ein Rohrprofil als Querträger für die Verbundlenkerachse der Figur 1 und
- Figuren 3 bis 6: diverse Querschnitte durch das Rohrprofil der Figur 2 entlang der Linien III-III, IV-IV, V-V und VI-VI.

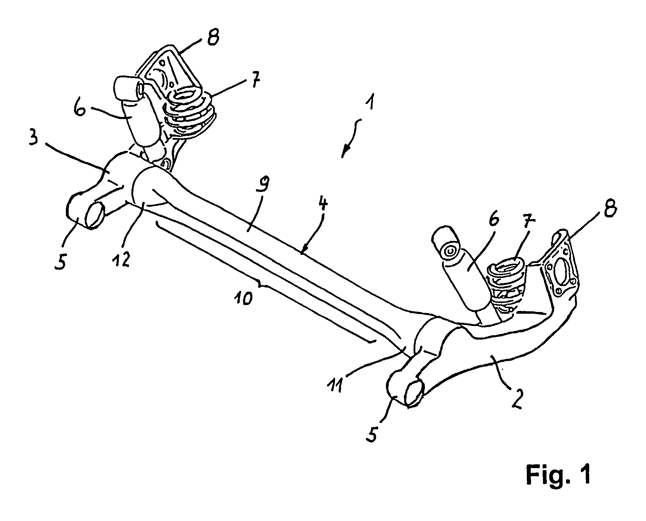

Die in Figur 1 dargestellte Verbundlenkerachse 1 in Form einer Verbundlenkerhinterachse umfasst im wesentlichen zwei radführende Längslenker 2, 3 und einen die beiden Längslenker 2, 3 verbindenden Querträger 4. An den vorderen Enden der Längslenker 2, 3 ist je ein Lagerauge 5 zur elastischen Anlenkung an einen hier nicht näher dargestellten Fahrzeugaufbau vorgesehen. Zwischen den Längslenkern 2, 3 und dem Fahrzeugaufbau sind ferner Stoßdämpfer 6 und Federn 7 angeordnet. Am rückwärtigen Ende der Längslenker 2, 3 sind Aufnahmen 8 zur Verbindung mit jeweils einem Radträger zur Lagerung eines Rads vorgesehen.

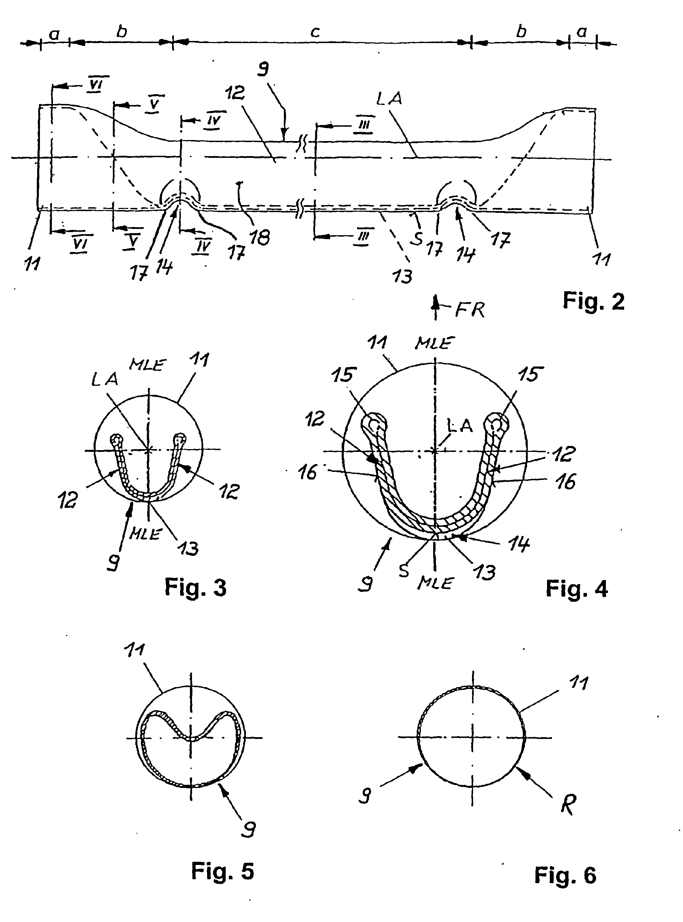

Der Querträger 4 besteht aus einem Rohrprofil 9. Das Rohrprofil 9 ist aus einem ursprünglich runden Rohr R (Figur 6) hergestellt, das aus einem mikrolegierten höherfesten Stahl, beispielsweise der Werkstoffqualität S420NC besteht. Das Rohr R kann aber auch aus mehrphasigem höherfesten Stahl gebildet sein. Ferner ist ein Edelstahl, insbesondere hochchromlegierter rostfreier Edelstahl, denkbar.

Im Zuge einer spanlosen Kaltumformung wird der Querschnitt 11 des Rohrs R in den Endabschnitten a des Rohrprofils 9 aufrecht erhalten. Dieser kreisrunde Querschnitt 11 in den Endabschnitten a geht jedoch in den Übergangsabschnitten b kontinuierlich in einen U-förmigen doppelwandigen Querschnitt 10 über, der sich über den mittleren Längenabschnitt c des Rohrprofils 9 erstreckt (Figuren 1 bis 6).

Unter der Annahme, dass das Rohrprofil 9 gemäß Figur 2 in der Draufsicht, das heißt in der Einbaulage im Personenkraftwagen dargestellt ist, erstrecken sich die Schenkel 12 des mittleren U-förmigen Längenabschnitts c (Figuren 3 und 4) von einem bogenförmigen Steg 13 aus unter leichter Divergenz bezüglich der durch die Längsachse LA verlaufenden horizontalen Mittellängsebene MLE des Rohrprofils 9 in Fahrtrichtung FR (Figur 4).

Das Rohrprofil 9 ist endseitig des mittleren U-förmigen Längenabschnitts c mit sich in Querrichtung des Rohrprofils 9 erstreckenden sickenartigen Einprägungen 14 versehen. Die Figur 4 zeigt hierbei, dass die Einprägungen 14 ihre größte Tiefe am in der horizontalen Mittellängsebene MLE liegenden Scheitel S des U-förmigen Längenabschnitts c aufweisen. Ihre Tiefe verringert sich in Richtung auf die freien Enden 15 der Schenkel 12, bis sie gleichmäßig in die äußere Oberfläche 16 der Schenkel 12 einlaufen. Im Längsschnitt gesehen haben die Einprägungen 14 mithin eine sichelförmige Konfiguration.

Die Ränder 17 der Einprägungen 14 sind gerundet (Figur 2).

Nach z.B. dem Kaltumformen eines kreisrunden Rohrs R aus einem mikrolegierten höherfesten Stahl der Werkstoffqualität S420NC braucht das Rohrprofil 9 keiner weiteren Warmbehandlung mehr unterzogen zu werden. Es wird lediglich noch hinsichtlich seiner äußeren Oberfläche 18 mit Stahlkugeln bestrahlt und schließlich der Weiterkonfiguration zur Fertigstellung einer Verbundlenkerachse 1 zugeführt.

### Bezugszeichenaufstellung

- 1: - Verbundlenkerachse
- 2: - Längslenker
- 3: - Längslenker
- 4: - Querträger
- 5: - Lageraugen
- 6: - Stoßdämpfer
- 7: - Federn
- 8: - Aufnahmen
- 9: - Rohrprofil
- 10: - Querschnitt in c
- 11: - Querschnitt in a
- 12: - Schenkel v. c
- 13: - Steg
- 14: - Einprägungen
- 15: - Enden v. 12
- 16: - Oberfläche v. 12
- 17: - Ränder v. 14
- 18: - Oberfläche v. 9

- a: - Endabschnitte v. 9
- b: - Übergangsabschnitte v. 9
- c: - mittlerer Längenabschnitt v. 9
- FR: - Fahrtrichtung
- LA: - Längsachse v. 9
- MLE: - Mittellängsebene v. 9
- R: - Rohr
- S: - Scheitel v. c

## Patentansprüche

1. Querträger als Bestandteil einer Verbundlenkerachse eines Personenkraftwagens, der aus einem biegesteifen torsionsweichen Rohrprofil (9) besteht, das einen torsionsweichen mittleren Längenabschnitt (c) mit doppelwandigem U-förmigen Querschnitt (10) sowie torsionssteife Endabschnitte (a) aufweist, **dadurch gekennzeichnet, daß** das Rohrprofil (9) durch Kaltumformung eines Rohrs (R) aus einem mikrolegierten hochfesten Stahl gebildet ist.

2. Querträger nach Patentanspruch 1, bei welchem das Rohr (R) aus einem kalt- oder warmgewalzten mikrolegierten höherfesten Stahl besteht.

3. Querträger nach Patentanspruch 1 oder 2, bei welchem das Rohr (R) aus einem Stahl der Werkstoffqualität S420NC besteht.

4. Querträger als Bestandteil einer Verbundlenkerachse eines Personenkraftwagens, der aus einem biegesteifen torsionsweichen Rohrprofil (9) besteht, das einen torsionsweichen mittleren Längenabschnitt (c) mit doppelwandigem U-förmigen Querschnitt (10) sowie torsionssteife Endabschnitte (a) aufweist, **dadurch gekennzeichnet, daß** das Rohrprofil (9) durch Kaltumformung eines Rohrs (R) aus einem mehrphasigen höherfesten Stahl gebildet ist.

5. Querträger nach Patentanspruch 4, bei welchem das Rohr (R) aus einem kalt- oder warmgewalzten mehrphasigen höherfesten Stahl besteht.

6. Querträger nach Patentanspruch 4 oder 5, bei welchem das Rohr (R) aus einem Dual-Phasen-Stahl besteht.

7. Querträger nach einem der Patentansprüche 4 bis 6, bei welchem das Rohr (R) aus einem Stahl der Werkstoffqualität DP 600 besteht.

8. Querträger nach Patentanspruch 4 oder 5, bei welchem das Rohr (R) aus einem ferritisch-bainitischen Stahl besteht.

9. Querträger als Bestandteil einer Verbundlenkerachse eines Personenkraftwagens, der aus einem biegesteifen torsionsweichen Rohrprofil (9) einen torsionsweichen mittleren Längenabschnitt (c) mit doppelwandigem U-förmigen Querschnitt (10) sowie torsionssteife Endabschnitte (a) aufweist **dadurch gekennzeichnet, daß** das Rohrprofil (9) aus Edelstahl, insbesondere aus einem hochchromlegierten rostfreien Edelstahl, besteht.

10. Querträger nach einem der Patentansprüche 1 bis 9, bei welchem die Endabschnitte (a) einen kreisrunden Querschnitt (11) besitzen.

11. Querträger nach einem der Patentansprüche 1 bis 9, bei welchem die Endabschnitte (a) einen von der Kreisform abweichenden Querschnitt aufweisen.

12. Querträger nach einem der Patentansprüche 1 bis 11, bei welchem mindestens die äußere Oberfläche (16) des Rohrprofils (9) verfestigt ist.

13. Querträger nach einem der Patentansprüche 1 bis 12, bei welchem mindestens die äußere Oberfläche (16) des Rohrprofils (9) durch eine Bestrahlung mit Kugeln, insbesondere Stahlkugeln, verfestigt ist.

## Claims

1. Crossmember as a constituent of a torsion-beam axle of a passenger motor vehicle, which crossmember is composed of a bending-resistant torsionally flexible tube profile (9) which has a torsionally flexible central longitudinal section (c) with a double-walled U-shaped cross section (10) and torsionally rigid end sections (a), **characterized in that** the tube profile (9) is formed by means of cold working of a tube (R) composed of a microalloyed high-strength steel.

2. Crossmember according to Patent Claim 1, in which the tube (R) is composed of a cold-rolled or hot-rolled microalloyed high-strength steel.

3. Crossmember according to Patent Claim 1 or 2, in which the tube (R) is composed of a steel of material quality S420NC.

4. Crossmember as a constituent of a torsion-beam axle of a passenger motor vehicle, which crossmember is composed of a bending-resistant torsionally flexible tube profile (9) which has a torsionally flexible central longitudinal section (c) with a double-walled U-shaped cross section (10) and torsionally rigid end sections (a), **characterized in that** the tube profile (9) is formed by means of cold working of a tube (R) composed of a multiphase high-strength steel.

5. Crossmember according to Patent Claim 4, in which the tube (R) is composed of a cold-rolled or hot-rolled multiphase high-strength steel.

6. Crossmember according to Patent Claim 4 or 5, in which the tube (R) is composed of a dual-phase steel.

7. Crossmember according to one of Patent Claims 4 to 6, in which the tube (R) is composed of a steel of material quality DP 600.

8. Crossmember according to Patent Claim 4 or 5, in which the tube (R) is composed of a ferritic-bainitic steel.

9. Crossmember as a constituent of a torsion-beam axle of a passenger motor vehicle, which crossmember is composed of a bending-resistant torsionally flexible tube profile (9) which has a torsionally flexible central longitudinal section (c) with a double-walled U-shaped cross section (10) and torsionally rigid end sections (a), **characterized in that** the tube profile (9) is composed of high-grade steel, in particular a rust-resistant high-grade steel alloyed with a high chromium content.

10. Crossmember according to one of Patent Claims 1 to 9, in which the end sections (a) have a circular cross section (11).

11. Crossmember according to one of Patent Claims 1 to 9, in which the end sections (a) have a non-circular cross section.

12. Crossmember according to one of Patent Claims 1 to 11, in which at least the outer surface (16) of the tube profile (9) is hardened.

13. Crossmember according to one of Patent Claims 1 to 12, in which at least the outer surface (16) of the tube profile (9) is hardened by means of shot-peening with balls, in particular steel balls.

## Revendications

1. Traverse faisant partie intégrante d'un essieu à traverse déformable en torsion d'un véhicule de tourisme, laquelle se compose d'un profilé tubulaire (9) rigide en flexion et souple en torsion, lequel présente une section médiane longitudinale (c) souple en torsion dotée d'une une section (10) en forme de U à double paroi ainsi que des sections d'extrémité (a) rigides en torsion, **caractérisée en ce que** le profilé tubulaire (9) est formé par formage à froid d'un tube (R) se composant d'un acier micro-allié à haute résistance.

2. Traverse selon la revendication 1, dans laquelle le tube (R) se compose d'un acier micro-allié à très haute résistance laminé à froid ou à chaud.

3. Traverse selon la revendication 1 ou 2, dans laquelle le tube (R) se compose d'un acier de qualité de matériau S420NC.

4. Traverse faisant partie intégrante d'un essieu à traverse déformable en torsion d'un véhicule de tourisme, laquelle se compose d'un profilé tubulaire (9) rigide en flexion et souple en torsion, lequel présente une section médiane longitudinale (c) dotée d'une section (10) en forme de U à double paroi ainsi que des sections d'extrémité (a) rigides en torsion (a), **caractérisée en ce que** le profilé tubulaire (9) est formé par formage à froid d'un tube (R) se composant d'un acier très haute résistance multiphasé.

5. Traverse selon la revendication 4, dans laquelle le tube (R) se compose d'un acier multiphasé à très haute résistance laminé à froid ou à chaud.

6. Traverse selon la revendication 4 ou 5, dans laquelle le tube (R) se compose d'un acier double-phase.

7. Traverse selon l'une quelconque des revendications 4 à 6, dans laquelle le tube (R) se compose d'un acier de qualité de matériau DP 600.

8. Traverse selon la revendication 4 ou 5, dans laquelle le tube (R) se compose d'un acier ferritique-bainitique.

9. Traverse faisant partie intégrante d'un essieu à traverse déformable en torsion d'un véhicule de tourisme, laquelle se compose d'un profilé tubulaire (9) rigide en flexion et souple en torsion, lequel présente une section médiane longitudinale (c) dotée d'une section (10) en forme de U à double paroi ainsi que des sections d'extrémité (a) rigides en torsion, **caractérisée en ce que** le profilé tubulaire (9) se compose d'un acier spécial, en particulier d'un acier spécial inoxydable fortement allié au chrome.

10. Traverse selon l'une quelconque des revendications 1 à 9, dans laquelle les sections d'extrémité (a) possèdent une section circulaire (11).

11. Traverse selon l'une quelconque des revendications 1 à 9, dans laquelle les sections d'extrémité (a) présentent une section différente de la forme circulaire.

12. Traverse selon l'une quelconque des revendications 1 à 11, dans laquelle au moins la surface extérieure (16) du profilé tubulaire (9) est durcie.

13. Traverse selon l'une quelconque des revendications 1 à 12, dans laquelle au moins la surface extérieure (16) du profilé tubulaire (9) est durcie par un billage, en particulier au moyen de billes d'acier.
